# EUROPÄISCHE PATENTSCHRIFT

(11) **EP 2 996 912 B1**
(45) Veröffentlichungstag und Bekanntmachung des Hinweises auf die Patenterteilung: **08.08.2018**
(21) Anmeldenummer: 14722179.0
(22) Anmeldetag: 05.05.2014
(51) Int. Cl.: B60T 8/32

(54) **STEUERVORRICHTUNG FÜR EIN BREMSKRAFTVERSTÄRKTES AUTONOMES BREMSSYSTEM EINES FAHRZEUGS UND VERFAHREN ZUM BETREIBEN EINES BREMSKRAFTVERSTÄRKTEN AUTONOMEN BREMSSYSTEMS EINES FAHRZEUGS**
CONTROL DEVICE FOR A BRAKE-POWER-ASSISTED AUTONOMOUS BRAKE SYSTEM OF A VEHICLE AND METHOD FOR OPERATING A BRAKE-POWER-ASSISTED AUTONOMOUS BRAKE SYSTEM OF A VEHICLE
DISPOSITIF DE COMMANDE D'UN SYSTÈME DE FREINAGE ASSISTÉ AUTONOME D'UN VÉHICULE ET PROCÉDÉ PERMETTANT DE FAIRE FONCTIONNER UN SYSTÈME DE FREINAGE ASSISTÉ AUTONOME D'UN VÉHICULE

(30) Priorität: 15.05.2013 DE 102013209006
(43) Veröffentlichungstag der Anmeldung: 23.03.2016
(73) Patentinhaber: Robert Bosch GmbH, 70442 Stuttgart (DE)
(72) Erfinder: BUNK, Michael, 74211 Leingarten (DE)
(86) Internationale Anmeldenummer: PCT/EP2014/059121
(87) Internationale Veröffentlichungsnummer: WO 2014/184034

(56) Entgegenhaltungen:
- WO-A2-2009/083216
- WO-A2-2009/083216
- US-B1- 6 212 459

## Beschreibung

Die Erfindung betrifft eine Steuervorrichtung für ein bremskraftverstärktes autonomes Bremssystem eines Fahrzeugs. Ebenso betrifft die Erfindung ein bremskraftverstärktes autonomes Bremssystem für ein Fahrzeug. Des Weiteren betrifft die Erfindung ein Verfahren zum Betreiben eines bremskraftverstärkten autonomen Bremssystems eines Fahrzeugs.

### Stand der Technik

In der DE 103 24 243 A1 sind ein Verfahren und eine Vorrichtung zum Abbremsen eines Kraftfahrzeugs mittels eines Fahrerassistenzsystems beschrieben. Mittels des Verfahrens und der Vorrichtung sollen fahrerunabhängige Bremseingriffe ausführbar sein, indem zunächst mittels einer aus einem Bremsfluid-Reservoir gespeisten Pumpe ein Bremsdruckaufbau in den Radbremszylindern eines an einem Hauptbremszylinder nichtangebundenen Hinterachs-Bremskreises ausgeführt wird, und ausschließlich für stärkere Fahrzeug-Verzögerungen eine Hilfspumpe eines an dem Hauptbremszylinder angebundenen Vorderachs-Bremskreises zum Bremsdruckaufbau in den Radbremszylindern des Vorderachs-Bremskreises aktiviert wird. Lediglich zur Erzielung einer maximalen Fahrzeug-Verzögerung soll in den Radbremszylindern des Vorderachs-Bremskreises ein zusätzlicher Bremsdruckaufbau mittels einer Rückförderpumpe des Vorderachs-Bremskreises erfolgen.

Die WO 2009/083216 A2 beschreibt ein Bremssystem mit einem adaptiv steuerbaren Bremsbelaglüftspiel. Zum adaptiven Steuern des künstlich erzeugten Bremsbelaglüftspiels wird ein schneller Bremskraftverstärker vor einer Bremsbetätigung so angesteuert, dass das Bremsbelaglüftspiel zumindest teilweise geschlossen wird.

Des Weiteren beschreibt die US 6,212,459 B1 ein Bremssystem für Motorfahrzeuge. Bei einer Betätigung des Bremssystems wird ab einem Überschreiten eines vorgegebenen Fahrerbremskraft-Schwellwerts zusätzlich zu einem Bremskraftverstärker noch mindestens eine Pumpe zur Förderung eines zusätzlichen Bremsflüssigkeitsvolumens in die Radbremszylinder des Bremssystems eingesetzt.

### Offenbarung der Erfindung

Die Erfindung schafft eine Steuervorrichtung für ein bremskraftverstärktes autonomes Bremssystem eines Fahrzeugs mit den Merkmalen des Anspruchs 1, ein bremskraftverstärktes autonomes Bremssystem für ein Fahrzeug mit den Merkmalen des Anspruchs 7 und ein Verfahren zum Betreiben eines bremskraftverstärkten autonomen Bremssystems eines Fahrzeugs mit den Merkmalen des Anspruchs 8.

### Vorteile der Erfindung

Die vorliegende Erfindung ermöglicht ein kombiniertes Einsetzen der mindestens einen Pumpe und des aktiven Bremskraftverstärkers für einen schnelleren und/oder geräuschärmeren Bremsdruckaufbau in dem mindestens einen Radbremszylinder zum Ausführen einer autonomen fahrerbremskraftlosen Bremsung. Da der aktive Bremskraftverstärker, wie beispielsweise ein elektromechanischer Bremskraftverstärker und/oder ein Vakuumbremskraftverstärker, in der Regel bei dem Bremssystem bereits vorhanden ist, erfordert ein Verwenden der vorliegenden Erfindung keine zusätzliche Ausstattung des bremskraftverstärkten autonomen Bremssystems mit einer weiteren Komponente. Durch die mittels der vorliegenden Erfindung realisierbare Multifunktionalität des aktiven Bremskraftverstärkers können die Herstellungskosten, der Montageaufwand und/oder der Bauraumbedarf des bremskraftverstärkten autonomen Bremssystems reduziert werden. Außerdem ist der aktive Bremskraftverstärker in der Regel geräuscharm einsetzbar. Somit entfallen bei der vorliegenden Erfindung die bei einem herkömmlichen autonomen fahrerbremskraftlosen Bremsdruckaufbau ausschließlich mittels mindestens einer Pumpe auftretenden Geräusche.

Wie unten genauer ausgeführt wird, ist durch die mittels der vorliegenden Erfindung realisierte Kombination der mindestens einen Pumpe und des aktiven Bremskraftverstärkers eine sehr hohe Druckaufbaudynamik über den gesamten Wertebereich der in dem mindestens einen Radbremszylinder bewirkbaren Bremsdrücke ermöglicht. Die mittels der vorliegenden Erfindung realisierbare hohe Druckaufbaudynamik weist von einem drucklosen Zustand des mindestens einen Radbremszylinders bis zu einem darin vorliegenden Blockierdruckniveau eine vorteilhaft hohe Steigung der Druck-Zeit-Kennlinie auf. Nachteile/Schwachpunkte der herkömmlichen mäßigen Druckaufbaudynamik bei einem autonomen fahrerbremskraftlosen Bremsdruckaufbau mittels lediglich mindestens einer Pumpe können durch die vorliegende Erfindung damit behoben werden.

Die vorliegende Erfindung ist für einen fahrerbremskraftlosen Bremsdruckaufbau als den autonomen Bremsdruckaufbau geeignet.

Vorteilhafterweise ist die Ansteuereinrichtung dazu ausgelegt, den aktiven Bremskraftverstärker mittels des mindestens einen Bremskraftverstärker-Steuersignals und die mindestens eine Pumpe mittels des mindestens einen Pumpen-Steuersignals derart kombiniert anzusteuern, dass der Bremsdruck in dem mindestens einen Radbremszylinder autonom und/oder fahrerbremskraftlos steigerbar ist. (Unter einem kombinierten Ansteuern ist nicht unbedingt ein gleichzeitiges Ansteuern oder ein Ansteuern zum gleichzeitigen Betreiben des aktiven Bremskraftverstärkers und der mindestens einen Pumpe zu verstehen.) Insbesondere kann die Ansteuereinrichtung dazu ausgelegt sein, den aktiven Bremskraftverstärker mittels des mindestens einen Bremskraftverstärker-Steuersignals und die mindestens eine Pumpe mittels des mindestens einen Pumpen-Steuersignals derart kombiniert anzusteuern, dass der Bremsdruck in dem mindestens einen Radbremszylinder autonom und fahrerbremskraftlos für eine Fahrerassistenzfunktion oder für eine Notbremsung steigerbar ist. Die Steuervorrichtung ist somit vielseitig einsetzbar.

In einer vorteilhaften Ausführungsform ist die Ansteuereinrichtung dazu ausgelegt, einen elektromechanischen Bremskraftverstärker als den aktiven Bremskraftverstärker mittels des mindestens einen Bremskraftverstärker-Steuersignals anzusteuern. Die vorliegende Erfindung ist somit auch für Bremssysteme mit einem zur geregelten Bremskraftverstärkung und/oder zum Verblenden eines Generator-Bremsmoments einsetzbaren elektromechanischen Bremskraftverstärker nutzbar. Die vorliegende Erfindung trägt somit mit dazu bei, den Fahrer zur Benutzung eines mit einem elektromechanischen Bremskraftverstärker ausgestatteten Bremssystems anzuregen, welches aufgrund der vorteilhaften Einsetzbarkeit des elektromechanischen Bremskraftverstärkers zum Verblenden des Generator-Bremsmoments ein emissionsärmeres und weniger kraftstoffverbrauchendes Fahren des damit ausgestatteten Fahrzeugs ermöglicht.

Außerdem ist die Ansteuereinrichtung dazu ausgelegt, den aktiven Bremskraftverstärker und die mindestens eine Pumpe nacheinander derart zu betreiben, dass der Bremsdruck in dem mindestens einen Radbremszylinder zuerst von einem Ausgangsdruck auf einen Zwischendruck ausschließlich mittels des von dem mindestens einen Bremskraftverstärker-Steuersignal angesteuerten aktiven Bremskraftverstärkers und danach von dem Zwischendruck auf einen höheren Druck ausschließlich mittels der von dem mindestens einen Pumpen-Steuersignal angesteuerten mindestens einen Pumpe steigerbar ist. Wie unten genauer ausgeführt wird, bietet dieses kombinierte nacheinander Ansteuern der mindestens einen Pumpe und des aktiven Bremskraftverstärkers eine vorteilhafte Druckaufbaudynamik.

In einer weiteren vorteilhaften Ausführungsform ist die Ansteuereinrichtung dazu ausgelegt, das Vorgabesignal von einer externen Fahrerassistenzvorrichtung und/oder von einer externen Notbremsvorrichtung zu empfangen. Die Steuervorrichtung kann somit vorteilhaft mit einer bereits an dem Fahrzeug vorhandenen Fahrerassistenzvorrichtung und/oder Notbremsvorrichtung zusammenwirken. Als Alternative dazu kann die Steuervorrichtung auch mit mindestens einem internen und/oder externen Sensor so zusammenwirken, dass eine Auswerteeinrichtung der Steuervorrichtung unter Berücksichtigung des mindestens einen Sensorsignals des mindestens einen Sensors das Vorgabesignal an die Ansteuereinrichtung bereitstellt. Somit ist eine Vielzahl von Ausführungsmöglichkeiten für die Steuervorrichtung realisierbar.

In einer vorteilhaften Weiterbildung ist die Steuervorrichtung als Fahrerassistenzvorrichtung und/oder als Notbremsvorrichtung ausgebildet. Die Steuervorrichtung kann somit auch ohne ein Zusammenwirken mit einer weiteren Vorrichtung ein komfortableres und/oder sicheres Fahren des damit ausgestatteten Fahrzeugs bewirken.

Die in den vorausgehenden Absätzen beschriebenen Vorteile sind auch bei einem bremskraftverstärkten autonomen Bremssystem für ein Fahrzeug mit einer derartigen Steuervorrichtung gewährleistet.

Des Weiteren sind die Vorteile realisierbar durch ein Ausführen eines korrespondierenden Verfahrens zum Betreiben eines bremskraftverstärkten autonomen Bremssystems eines Fahrzeugs. Das Verfahren zum Betreiben eines bremskraftverstärkten autonomen Bremssystems ist gemäß den oben beschriebenen Ausführungsformen der Steuervorrichtung weiterbildbar.

### Kurze Beschreibung der Zeichnungen

Weitere Merkmale und Vorteile der vorliegenden Erfindung werden nachfolgend anhand der Figuren erläutert. Es zeigen:
- Fig. 1a bis 1d: eine schematische Darstellung einer Ausführungsform der Steuervorrichtung und Koordinatensysteme zum Erläutern von deren Funktionsweise; und
- Fig. 2: ein Flussdiagramm zum Erläutern einer Ausführungsform des Verfahrens zum Betreiben eines bremskraftverstärkten autonomen Bremssystems eines Fahrzeugs.

### Ausführungsformen der Erfindung

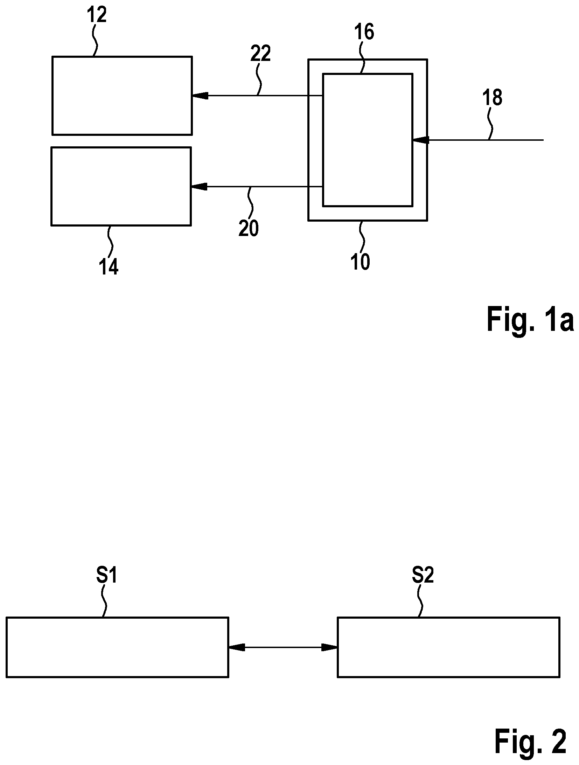

Fig. 1a bis 1d zeigen eine schematische Darstellung einer Ausführungsform der Steuervorrichtung und Koordinatensysteme zum Erläutern von deren Funktionsweise.

Die in Fig. 1a schematisch dargestellte Steuervorrichtung 10 ist zusammen mit einem bremskraftverstärkten autonomen Bremssystem eines Fahrzeugs einsetzbar. Unter dem bremskraftverstärkten autonomen Bremssystem kann ein Bremssystem verstanden werden, welches einen aktiven Bremskraftverstärker 12 aufweist, mittels welchem eine Verstärkerkraft derart auf mindestens einen verstellbaren Kolben eines (nicht dargestellten) Hauptbremszylinders des Bremssystems ausübbar ist, dass ein Innendruck in dem Hauptbremszylinder steigerbar ist. Vorzugsweise ist der aktive Bremskraftverstärker auch dazu ausgelegt, den Fahrer während einer Betätigung eines (nicht skizzierten) Bremsbetätigungselements, wie beispielsweise eines Bremspedals, kraftmäßig zu unterstützen. Häufig ist ein derartiger aktiver Bremskraftverstärker 12 zwischen dem Bremsbetätigungselement und dem Hauptbremszylinder angeordnet. Der aktive Bremskraftverstärker 12 kann insbesondere ein elektromechanischer Bremskraftverstärker und/oder ein Vakuumbremskraftverstärker sein. Es wird jedoch darauf hingewiesen, dass die Einsetzbarkeit der Steuervorrichtung 10 nicht auf einen bestimmten Typ und/oder eine bestimmte Anordnung des aktiven Bremskraftverstärkers 12 limitiert ist.

Das mit der Steuervorrichtung 10 zusammen einsetzbare bremskraftverstärkte autonome Bremssystem ist zumindest teilweise als hydraulisches Bremssystem mit mindestens einer Pumpe 14 umschreibbar. Es wird darauf hingewiesen, dass die Einsetzbarkeit der Steuervorrichtung 10 nicht auf eine bestimmte Ausbildung der mindestens einen Pumpe 14 und/oder mindestens eines Bremskreises des bremskraftverstärkten autonomen Bremssystems limitiert ist. Da das bremskraftverstärkte autonome Bremssystem somit mit einer Vielzahl verschiedener Bremskreise ausgestattet sein kann, wird auf den genauen Aufbau des bremskraftverstärkten autonomen Bremssystems hier nicht eingegangen.

Die Steuervorrichtung 10 umfasst eine Ansteuereinrichtung 16, welche dazu ausgelegt ist, unter Berücksichtigung eines bereitgestellten Vorgabesignals 18 bezüglich eines in mindestens einem (nicht dargestellten) Radbremszylinder des Bremssystems auszuführenden autonomen Bremsdruckaufbaus mindestens ein Pumpen-Steuersignal 20 an die mindestens eine Pumpe 14 des Bremssystems auszugeben. Die mindestens eine Pumpe 14 ist mittels des mindestens einen Pumpen-Steuersignals 20 so ansteuerbar, dass mittels der von dem mindestens einen Pumpen-Steuersignals 20 angesteuerten mindestens einen Pumpe 14 ein Bremsdruck in dem mindestens einen Radbremszylinder steigerbar ist. Außerdem ist die Ansteuereinrichtung 16 zusätzlich dazu ausgelegt, unter Berücksichtigung des Vorgabesignals 18 mindestens ein Bremskraftverstärker-Steuersignal 22 an den aktiven Bremskraftverstärker 12 so auszugeben, dass mittels des von dem mindestens einen Bremskraftverstärker-Steuersignal 22 angesteuerten aktiven Bremskraftverstärkers 12 eine Verstärkerkraft auf den mindestens einen verstellbaren Kolben des Hauptbremszylinders (direkt oder indirekt) ausübbar ist. Auf diese Weise ist der mindestens eine Kolben derart unter Aufbringung der Verstärkerkraft verstellbar, dass ein Innendruck in dem Hauptbremszylinder aufgrund des mindestens einen verstellten Kolbens steigerbar ist und der Bremsdruck in dem mindestens einen Radbremszylinder mittels des gesteigerten Innendrucks steigerbar ist.

Die vorteilhafte Auslegung der Ansteuereinrichtung 16 bietet somit ein kombiniertes Ansteuern der mindestens einen Pumpe 14 und des aktiven Bremskraftverstärkers 12 zum Ausführen eines autonomen (fahrerbremskraftlosen) Bremsdruckaufbaus in dem mindestens einen Radbremszylinder. Die Ansteuereinrichtung 16 nutzt dabei die Tatsache aus, dass ein aktiver Bremskraftverstärker 12 häufig an einem Bremssystem vorhanden ist. Somit kann eine bereits an dem Bremssystem vorhandene Komponente zur Unterstützung der mindestens einen Pumpe 14 bei einem autonomen (fahrerbremskraftlosen) Bremsdruckaufbau genutzt werden. Auf diese Weise kann auch eine Anzahl der für den autonomen Bremsdruckaufbau eingesetzten Pumpen 14 limitiert werden.

Beispielsweise kann als die mindestens eine Pumpe 14 ausschließlich die in der Regel an dem Bremssystem vorhandene mindestens eine Rückförderpumpe 14 eingesetzt werden. Eine Ausstattung des Bremssystems mit einer weiteren Pumpe zusätzlich zu der mindestens einen Rückförderpumpe 14 kann somit entfallen. Da aufgrund des vorteilhaften kombinierten Einsetzens der mindestens einen Pumpe 14 und des aktiven Bremskraftverstärkers 12 eine bestimmte Anbindung der mindestens einen Pumpe 14 und/oder die Ausstattung des Bremssystems mit weiteren Pumpen nicht notwendig ist, kann eine Vielzahl verschiedener Bremskreise an dem Bremssystem vorliegen. Zusätzlich zum Einsparen von weiteren Pumpen gewährleistet dies auch den Vorteil einer hohen Designfreiheit des mindestens einen Bremskreises des Bremssystems.

Außerdem ist ein Betrieb des aktiven Bremskraftverstärkers 14 meistens geräuscharm. Im Gegensatz zu einem herkömmlichen autonomen/fahrerbremskraftlosen Bremsdruckaufbau ausschließlich mittels eines Betriebs der mindestens einen Pumpe 14 ist der von der Ansteuereinrichtung 16 realisierte autonome Bremsdruckaufbau durch kombiniertes Ansteuern der mindestens einen Pumpe 14 und des aktiven Bremskraftverstärkers 12 deshalb vergleichsweise leise. Weitere Vorteile des kombinierten Ansteuerns der mindestens einen Pumpe 14 und des aktiven Bremskraftverstärkers 12 mittels der Ansteuereinrichtung 16 werden unten noch genannt.

Die Ansteuereinrichtung 16 kann dazu ausgelegt ist, den aktiven Bremskraftverstärker 12 mittels des mindestens einen Bremskraftverstärker-Steuersignals 22 und die mindestens eine Pumpe 14 mittels des mindestens einen Pumpen-Steuersignals 20 derart kombiniert anzusteuern, dass der Bremsdruck in dem mindestens einen Radbremszylinder autonom und fahrerbremskraftlos steigerbar ist. Insbesondere kann der Bremsdruck in dem mindestens einen Radbremszylinder autonom/fahrerbremskraftlos für eine Fahrerassistenzfunktion oder für eine Notbremsung steigerbar sein. Die Steuervorrichtung 10 kann somit vielseitig eingesetzt werden.

Wahlweise kann die Ansteuereinrichtung 16 dazu ausgelegt sein, das Vorgabesignal 18 von einer externen Fahrerassistenzvorrichtung und/oder von einer externen Notbremsvorrichtung zu empfangen. Als Alternative dazu kann die Steuervorrichtung auch selbst als Fahrerassistenzvorrichtung und/oder als Notbremsvorrichtung ausgebildet sein. Beispielsweise kann die Steuervorrichtung 10 dazu ausgelegt sein, mit mindestens einem internen oder externen Sensor, insbesondere mit mindestens einem Sensor zum Ermitteln einer Umgebungsinformation, wie beispielsweise einem Radarsensor, einem Ultraschallsensor und/oder einer Kamera, zusammen zu wirken. Vorzugsweise weist die Steuervorrichtung 10 in diesem Fall auch eine (nicht skizzierte) Auswerteeinrichtung auf, mittels welcher das mindestens eine Sensorsignal des mindestens einen Sensors auswertbar ist. Insbesondere kann die Auswerteeinrichtung dazu ausgelegt sein, anhand des mindestens einen Sensors zu erkennen, dass ein autonomer Bremseneingriff aufgrund der aktuellen Umgebungsinformation/Verkehrsinformation vorteilhaft ist, und, gegebenenfalls das Vorgabesignal 18 bereitzustellen.

Die Steuervorrichtung 10 kann somit auch ohne das Zusammenwirken mit einer weiteren Vorrichtung einen Sicherheitsstandard und/oder einen Fahrkomfort des damit ausgestatteten Fahrzeugs steigern. Es wird darauf hingewiesen, dass eine Vielzahl von verschiedenen Fahrerassistenzfunktionen mittels der Steuervorrichtung 10 ausführbar sein kann. Beispielsweise kann die Steuervorrichtung 10 auch zusätzlich dazu ausgelegt sein, Elemente des Fahrwerks, des Antriebsstrangs und/oder der Lenkung des damit ausgestatteten Fahrzeugs anzusteuern. Da die Ausbildbarkeit der Steuervorrichtung 10 nicht auf einen bestimmten Typ der Fahrerassistenzvorrichtung und/oder der Notbremsvorrichtung limitiert ist, wird hier auf die Ausbildungsmöglichkeiten nicht genauer eingegangen.

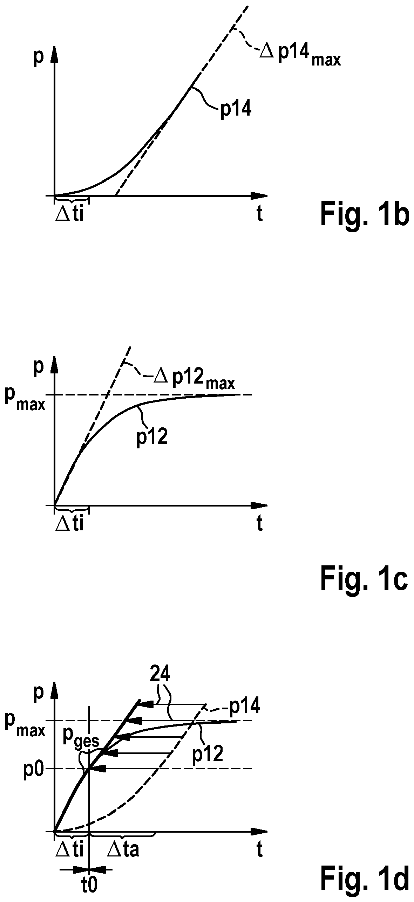

Anhand der Koordinatensysteme der Fig. 1b bis 1d ist eine Funktionsweise der Steuervorrichtung 10 der Fig. 1a wiedergegeben. Die Abszissen der Koordinatensysteme der Fig. 1b bis 1d ist jeweils die Zeitachse t. Die Ordinaten der Koordinatensysteme der Fig. 1b bis 1d geben einen innerhalb eines Zeitintervalls von 0 bis zu der Zeit t in dem mindestens einen Radbremszylinder autonom aufbaubaren Bremsdruck p wieder.

Bei dem hier beschriebenen Ausführungsbeispiel ist die Ansteuereinrichtung 16 dazu ausgelegt, mindestens eine Rückförderpumpe 14 als die mindestens eine Pumpe 14 und einen elektromechanischen Bremskraftverstärker 12 als den aktiven Bremskraftverstärker 12 zur Erzeugung eines autonomen Bremseneingriffs anzusteuern:

Das Koordinatensystem der Fig. 1b gibt eine Kennlinie p14 (Druckaufbaudynamik) des ausschließlich mittels der mindestens einen Rückförderpumpe 14 (bei einem autonomen/fahrerbremskraftlosen Bremsdruckaufbau) in mindestens einem Radbremszylinder aufgebauten Bremsdrucks p in Abhängigkeit von der Zeit t wieder. Dabei fällt auf, dass die Kennlinie p14 der mindestens einen Rückförderpumpe 14 bei einem Bremsdruck gleich Null ein Minimum hat. (Dies gilt auch bei einer Ansteuerung der mindestens einen Rückförderpumpe 14 mit 100 % Versorgungsspannung.) Innerhalb eines Anfangszeitintervalls Δti (beginnend zu einer Anfangszeit t=0) wiest die Kennlinie p14 der mindestens einen Rückförderpumpe 14 bei einem von einem drucklosen Zustand startenden autonomen (fahrerbremskraftlosen) Bremsdruckaufbau eine vergleichsweise geringe Steigung auf. Dies ist durch eine nicht-lineare Volumenaufnahme der Radbremszylinder bei einem autonomen Bremsdruckaufbau ausschließlich mittels der mindestens einen Rückförderpumpe 14 bedingt. Erst bei höheren Bremsdrücken/nach dem Anfangszeitintervall t1 nimmt die Kennlinie p14 der mindestens einen Rückförderpumpe 14 mit einer vergleichsweise hohen Steigung Δp14ₘₐₓ zu.

In dem Koordinatensystem der Fig. 1c ist eine Kennlinie p14 (Druckaufbaudynamik) des ausschließlich mittels des elektromechanischen Bremskraftverstärkers (bei einem autonomen/fahrerbremskraftlosen Bremsdruckaufbau) in mindestens einem Radbremszylinder aufgebauten Bremsdrucks p in Abhängigkeit von der Zeit t dargestellt Die Kennlinie p12 des elektromechanischen Bremskraftverstärkers 12 weist bei einem von einem drucklosen Zustand startenden autonomen (fahrerbremskraftlosen) Bremsdruckaufbau innerhalb des Anfangszeitintervalls Δti eine vergleichsweise große Steigung Δp12ₘₐₓ auf. Man kann dies auch so umschreiben, dass die Kennlinie p12 des elektromechanischen Bremskraftverstärkers 12 trotz der nicht-linearen Volumenaufnahme des mindestens einen Radbremszylinders über einen weiten Druckbereich einen hohen Druckaufbaugradienten/die vergleichsweise große Steigung Δp12ₘₐₓ aufweist. Allerdings wird der für einen autonomen Bremsdruckaufbau ausschließlich mittels des elektromechanischen Bremskraftverstärkers 12 maximal erreichbare Bremsdruck pmax früh begrenzt. Bedingt dadurch weist die Kennlinie p12 des elektromechanischen Bremskraftverstärkers 12 in einem Druckbereich nahe an dem maximal erreichbaren Bremsdruck pₘₐₓ geringe Steigungen auf. Außerdem ist es nicht möglich, bei einer ausschließlichen Nutzung des elektromechanischen Bremskraftverstärkers den Bremsdruck p über den maximal ausführbaren Bremsdruck pₘₐₓ zu steigern.

Anhand des Koordinatensystems der Fig. 1d ist das mittels der Ansteuereinrichtung 16 realisierbare vorteilhafte Zusammenspiel zwischen dem aktiven Bremskraftverstärker 12 und der mindestens einen Pumpe 14 wiedergegeben. Erkennbar ist, dass die Ansteuereinrichtung 16 dazu ausgelegt ist, den aktiven Bremskraftverstärker 12 und die mindestens eine Pumpe 14 nacheinander derart zu betreiben, dass der Bremsdruck p in dem mindestens einen Radbremszylinder zuerst von einem Ausgangsdruck (wie insbesondere dem Atmosphärendruck) auf einen Zwischendruck p0 ausschließlich mittels des von dem mindestens einen Bremskraftverstärker-Steuersignal 22 angesteuerten aktiven Bremskraftverstärkers 12 und danach von dem Zwischendruck p0 auf einen höheren Druck ausschließlich mittels der von dem mindestens einen Pumpen-Steuersignal 20 angesteuerten mindestens einen Pumpe 14 steigerbar ist. Man kann dies auch so umschreiben, dass ein initialer Druckaufbau während des Anfangszeitintervalls Δti ausschließlich mittels des aktiven Bremskraftverstärkers 12 erfolgt, bis zu einer Zwischenzeit t0 der Zwischendruck p0 erreicht ist. Ab dem Zwischendruck p0/der Zwischenzeit t0 erfolgt während eines Fortsetzungszeitintervalls Δta der weitere Druckaufbau ausschließlich mittels der mindestens einen Pumpe 14. Der Zwischendruck p0, bzw. die Zwischenzeit t0, ist vorzugsweise so gewählt, dass unterhalb des Zwischendrucks p0 die Kennlinie p12 des aktiven Bremskraftverstärkers 12 hohe Steigungen aufweist, während oberhalb des Zwischendrucks p0 die Kennlinie p14 der mindestens einen Pumpe 14 mit einer hohen Steigung zunimmt. In einer bevorzugten Ausführungsform ist der Zwischendruck p0, bzw. die Zwischenzeit t0, so festgelegt, dass erst ab dem Zwischendruck p0/der Zwischenzeit t0 eine Steigung dp12/dt der Kennlinie p12 des aktiven Bremskraftverstärkers 12 kleiner als eine Steigung dp14/dt der Kennlinie p14 der mindestens einen Pumpe 14 ist.

Die resultierende Kennlinie p_{ges} des mittels des kombinierten Betriebs zuerst des aktiven Bremskraftverstärkers 12 und anschließend der mindestens einen Pumpe 14 (bei einem autonomen/fahrerbremskraftlosen Bremsdruckaufbau) in mindestens einem Radbremszylinder aufgebauten Bremsdrucks p in Abhängigkeit von der Zeit t ist in dem Koordinatensystem der Fig. 1d dargestellt. Die Kennlinie p_{ges} des kombinierten Betriebs zuerst des aktiven Bremskraftverstärkers 12 und anschließend der mindestens einen Pumpe 14 weist für alle Zeiten t vergleichsweise hohe Steigungen auf. Somit gewährleistet die hier beschriebene Vorgehensweise einen Druckaufbau in dem mindestens einen Radbremszylinder, welcher über einen sehr weiten Druckbereich maximiert ist. Außerdem ist bei dem mittels der Pfeile 24 wiedergegebenen kombinierten Betrieb zuerst des aktiven Bremskraftverstärkers 12 und anschließend der mindestens einen Pumpe 14 eine Steigerung des Bremsdrucks über dem bei einer ausschließlichen Nutzung des aktiven Bremskraftverstärkers 12 maximal erreichbaren Bremsdruck pₘₐₓ leicht realsierbar.

Als Ergänzung zu der oben beschriebenen Vorgehensweise kann die Ansteuereinrichtung 16 auch dazu ausgelegt sein, in bestimmten Verkehrssituationen die mindestens eine Pumpe 14 und den aktiven Bremskraftverstärker 12 gleichzeitig zu betreiben. Dies kann, insbesondere in Notbremssituationen, einen starken Druckaufbau in dem mindestens einen Radbremszylinder für einen autonomen Bremseingriff realisieren. Auf diese Weise kann insbesondere in einer Notbremssituation das Fahrzeug schnell zum Stillstand gebracht werden.

Die oben beschriebenen Vorteile sind auch bei einem bremskraftverstärkten autonomen Bremssystem für ein Fahrzeug mit der Steuervorrichtung 10 gewährleistet.

Fig. 2 zeigt ein Flussdiagramm zum Erläutern einer Ausführungsform des Verfahrens zum Betreiben eines bremskraftverstärkten autonomen Bremssystems eines Fahrzeugs.

Das Verfahren umfasst einen Verfahrensschritt S1, in welchem ein autonomer fahrerbremskraftloser Bremsdruckaufbau in mindestens einem Radbremszylinder des Bremssystems teilweise ausgeführt wird. Dies geschieht durch Betreiben mindestens einer Pumpe des Bremssystems derart, dass mittels der betriebenen mindestens einen Pumpe ein Bremsdruck in dem mindestens einen Radbremszylinder gesteigert wird. Die mindestens eine Pumpe kann beispielsweise mindestens eine Rückförderpumpe sein. Die Ausführbarkeit des Verfahrens ist jedoch nicht auf die (ausschließliche) Verwendung der mindestens einen Rückförderpumpe zum Ausführen des Verfahrensschritts S1 begrenzt.

Das Verfahren weist auch einen Verfahrensschritt S2 auf, in welchem der autonome (fahrerbremskraftlose) Bremsdruckaufbau in dem mindestens einen Radbremszylinder des Bremssystems auch teilweise ausgeführt wird. In dem Verfahrensschritt S2 wird ein aktiver Bremskraftverstärker des Bremssystems zusätzlich so betrieben, dass mittels des aktiven Bremskraftverstärkers eine Verstärkerkraft auf mindestens einen verstellbaren Kolben eines Hauptbremszylinders des Bremssystems ausgeübt wird. Dies geschieht derart, dass der Bremsdruck in dem mindestens einen Radbremszylinder mittels eines aufgrund des mindestens einen verstellten Kolbens gesteigerten Innendrucks in dem Hauptbremszylinder gesteigert wird. Zum Ausführen des Verfahrensschritts S2 kann beispielsweise ein elektromechanischer Bremskraftverstärker eingesetzt werden. Die Ausführbarkeit des Verfahrensschritts S2 ist jedoch nicht auf die Verwendung eines elektromechanischen Bremskraftverstärkers limitiert.

Außerdem werden der aktive Bremskraftverstärker und die mindestens eine Pumpe nacheinander betrieben. Der Verfahrensschritt S2 wird somit vor dem Verfahrensschritt S1 ausgeführt. Dabei werden der aktive Bremskraftverstärker und die mindestens eine Pumpe nacheinander derart angesteuert, dass der Bremsdruck in dem mindestens Radbremszylinder zuerst von einem Ausgangsdruck/drucklosen Zustand auf einem Zwischendruck ausschließlich mittels des aktiven Bremskraftverstärkers und danach von dem Zwischendruck auf einen höheren Druck ausschließlich mittels der mindestens einen Pumpe gesteigert wird. Dies gewährleistet eine vorteilhafte Druckaufbaudynamik, wie sie oben bereits erläutert wurde.

Mittels des kombinierten Betreibens des aktiven Bremskraftverstärkers und der mindestens einen Pumpe gemäß dem hier beschriebenen Verfahren können eine Fahrerassistenzfunktion oder eine Notbremsung ausgeführt werden. Das Verfahren kann somit für eine Vielzahl von Verwendungsmöglichkeiten vorteilhaft eingesetzt werden.

## Patentansprüche

1. Steuervorrichtung (10) für ein bremskraftverstärktes autonomes Bremssystem eines Fahrzeugs mit:
einer Ansteuereinrichtung (16), welche dazu ausgelegt ist, unter Berücksichtigung eines bereitgestellten Vorgabesignals (18) bezüglich eines in mindestens einem Radbremszylinder des Bremssystems auszuführenden autonomen Bremsdruckaufbaus mindestens ein Pumpen-Steuersignal (20) an mindestens eine Pumpe (14) des Bremssystems so auszugeben, dass mittels der von dem mindestens einen Pumpen-Steuersignal (20) angesteuerten mindestens einen Pumpe (14) ein Bremsdruck (p) in dem mindestens einen Radbremszylinder steigerbar ist;
wobei die Ansteuereinrichtung (16) zusätzlich dazu ausgelegt ist, unter Berücksichtigung des Vorgabesignals (18) mindestens ein Bremskraftverstärker-Steuersignal (22) an einen aktiven Bremskraftverstärker (12) des Bremssystems so auszugeben, dass mittels des von dem mindestens einen Bremskraftverstärker-Steuersignal (22) angesteuerten aktiven Bremskraftverstärkers (12) eine Verstärkerkraft auf mindestens einen verstellbaren Kolben eines Hauptbremszylinders des Bremssystems derart ausübbar ist, dass der Bremsdruck (p) in dem mindestens einen Radbremszylinder mittels eines aufgrund des mindestens einen verstellten Kolbens gesteigerten Innendrucks in dem Hauptbremszylinder steigerbar ist;
**dadurch gekennzeichnet, dass**
die Ansteuereinrichtung (16) dazu ausgelegt ist, den aktiven Bremskraftverstärker (12) und die mindestens eine Pumpe (14) nacheinander derart zu betreiben, dass
- der Bremsdruck (p) in dem mindestens einen Radbremszylinder autonom und fahrerbremskraftlos steigerbar ist; und
- der Bremsdruck (p) in dem mindestens einen Radbremszylinder zuerst von einem Ausgangsdruck auf einen Zwischendruck (p0) ausschließlich mittels des von dem mindestens einen Bremskraftverstärker-Steuersignal (22) angesteuerten aktiven Bremskraftverstärkers (12) und danach von dem Zwischendruck (p0) auf einen höheren Druck ausschließlich mittels der von dem mindestens einen Pumpen-Steuersignal (20) angesteuerten mindestens einen Pumpe (14) steigerbar ist.

2. Steuervorrichtung (10) nach Anspruch 1, wobei die Ansteuereinrichtung (16) dazu ausgelegt ist, den aktiven Bremskraftverstärker (12) mittels des mindestens einen Bremskraftverstärker-Steuersignals (22) und die mindestens eine Pumpe (14) mittels des mindestens einen Pumpen-Steuersignals (20) derart kombiniert anzusteuern, dass der Bremsdruck (p) in dem mindestens einen Radbremszylinder autonom steigerbar ist.

3. Steuervorrichtung (10) nach Anspruch 2, wobei die Ansteuereinrichtung (16) dazu ausgelegt ist, den aktiven Bremskraftverstärker (12) mittels des mindestens einen Bremskraftverstärker-Steuersignals (22) und die mindestens eine Pumpe (14) mittels des mindestens einen Pumpen-Steuersignals (20) derart kombiniert anzusteuern, dass der Bremsdruck (p) in dem mindestens einen Radbremszylinder autonom für eine Fahrerassistenzfunktion oder für eine Notbremsung steigerbar ist.

4. Steuervorrichtung (10) nach einem der vorhergehenden Ansprüche, wobei die Ansteuereinrichtung (16) dazu ausgelegt ist, einen elektromechanischen Bremskraftverstärker als den aktiven Bremskraftverstärker (12) mittels des mindestens einen Bremskraftverstärker-Steuersignals (22) anzusteuern.

5. Steuervorrichtung (10) nach einem der vorhergehenden Ansprüche, wobei die Ansteuereinrichtung (16) dazu ausgelegt ist, das Vorgabesignal (18) von einer externen Fahrerassistenzvorrichtung und/oder von einer externen Notbremsvorrichtung zu empfangen.

6. Steuervorrichtung (10) nach einem der Ansprüche 1 bis 4, wobei die Steuervorrichtung (10) als Fahrerassistenzvorrichtung und/oder als Notbremsvorrichtung ausgebildet ist.

7. Bremskraftverstärktes autonomes Bremssystem für ein Fahrzeug mit einer Steuervorrichtung (10) nach einem der vorhergehenden Ansprüche.

8. Verfahren zum Betreiben eines bremskraftverstärkten autonomen Bremssystems eines Fahrzeugs mit dem Schritt:
Zumindest teilweises Ausführen eines autonomen Bremsdruckaufbaus in mindestens einem Radbremszylinder des Bremssystems durch Betreiben mindestens einer Pumpe (14) des Bremssystems derart, dass mittels der betriebenen mindestens einen Pumpe (14) ein Bremsdruck (p) in dem mindestens einen Radbremszylinder gesteigert wird (S1);
und durch teilweises Ausführen des autonomen Bremsdruckaufbaus durch zusätzliches Betreiben eines aktiven Bremskraftverstärkers (12) des Bremssystems so, dass mittels des aktiven Bremskraftverstärkers (12) eine Verstärkerkraft auf mindestens einen verstellbaren Kolben eines Hauptbremszylinders des Bremssystems derart ausgeübt wird, dass der Bremsdruck (p) in dem mindestens einen Radbremszylinder mittels eines aufgrund des mindestens einen verstellten Kolbens gesteigerten Innendrucks in dem Hauptbremszylinder gesteigert wird (S2);
**gekennzeichnet durch** die Schritte:
Ausführen des autonomen Bremsdruckaufbaus als einen fahrerbremskraftlosen Bremsdruckaufbau;
wobei der aktive Bremskraftverstärker (12) und die mindestens eine Pumpe (14) nacheinander derart betrieben werden, dass der Bremsdruck (p) in dem mindestens einen Radbremszylinder zuerst von einem Ausgangsdruck auf einen Zwischendruck (p0) ausschließlich mittels des aktiven Bremskraftverstärkers (12) und danach von dem Zwischendruck (p0) auf einen höheren Druck ausschließlich mittels der mindestens einen Pumpe (14) gesteigert wird.

9. Verfahren nach Anspruch 8, wobei mittels des kombinierten Betreibens des aktiven Bremskraftverstärkers (12) und der mindestens einen Pumpe (14) eine Fahrerassistenzfunktion oder eine Notbremsung ausgeführt werden.

## Claims

1. Control device (10) for a brake-power-assisted autonomous brake system of a vehicle, comprising
an actuating device (16), which is configured to output at least one pump control system (20) to at least one pump (14) of the brake system while taking into account a presetting signal (18) which is provided and which relates to an autonomous brake pressure build-up which is to be carried out in at least one wheel brake cylinder of the brake system such that, by means of the at least one pump (14) actuated by means of the at least one pump control signal (20), a brake pressure (p) in the at least one wheel brake cylinder can be increased;
the actuating device (16) additionally being configured to output at least one brake booster control signal (22) to an active brake booster (12) of the brake system while taking into account the presetting signal (18) such that, by means of the active brake booster (12) actuated by the at least one brake booster control signal (22), a booster force can be exerted on at least one adjustable piston of a brake master cylinder of the brake system in such a way that the brake pressure (p) in the at least one wheel brake cylinder can be increased by means of an internal pressure in the brake master cylinder that is increased because of the at least one adjusted piston;
**characterized in that**
the actuating device (16) is configured to operate the active brake booster (12) and the at least one pump (14) successively in such a way that
- the brake pressure (p) in the at least one wheel brake cylinder can be increased autonomously and without any driver brake force; and
- the brake pressure (p) in the at least one wheel brake cylinder can firstly be increased from an initial pressure to an intermediate pressure (p0) exclusively by means of the active brake booster (12) actuated by the at least one brake booster control signal (22) and, after that, can be increased from the intermediate pressure (p0) to a higher pressure exclusively by means of the at least one pump (14) actuated by the at least one pump control signal (20).

2. Control device (10) according to Claim 1, wherein the actuating device (16) is configured to actuate the active brake booster (12) by means of the at least one brake booster control signal (22) and the at least one pump (14) by means of the at least one pump control signal (20) in combination, such that the brake pressure (p) in the at least one wheel brake cylinder can be increased autonomously.

3. Control device (10) according to Claim 2, wherein the actuating device (16) is configured to actuate the active brake booster (12) by means of the at least one brake booster control signal (22) and the at least one pump (14) by means of the at least one pump control signal (20) in combination, such that the brake pressure (p) in the at least one wheel brake cylinder can be increased autonomously for a driver assistance function or for emergency braking.

4. Control device (10) according to one of the preceding claims, wherein the actuating device (16) is configured to actuate an electromechanical brake booster as the active brake booster (12) by means of the at least one brake booster control signal (22).

5. Control device (10) according to one of the preceding claims, wherein the actuating device (16) is configured to receive the presetting signal (18) from an external driver assistance device and/or from an external emergency braking device.

6. Control device (10) according to one of Claims 1 to 4, wherein the control device (10) is formed as a driver assistance device and/or an emergency braking device.

7. Brake-power-assisted autonomous braking system for a vehicle comprising a control device (10) according to one of the preceding claims.

8. Method for operating a brake-power-assisted autonomous brake system of a vehicle, having the step:
at least partly carrying out an autonomous brake pressure build-up in at least one wheel brake cylinder of the brake system by operating at least one pump (14) of the brake system in such a way that, by means of the operated at least one pump (14), a brake pressure (p) in the at least one wheel brake cylinder is increased (S1);
and by means of partially carrying out the autonomous brake pressure build-up by additionally operating an active brake booster (12) of the brake system such that, by means of the active brake booster (12), a booster force is exerted on at least one adjustable piston of a brake master cylinder of the brake system in such a way that the brake pressure (p) in the at least one wheel brake cylinder is increased (S2) by means of an internal pressure in the brake master cylinder that is increased because of the at least one adjusted piston;
**characterized by** the steps:
carrying out the autonomous brake pressure build-up as a brake pressure build-up without any driver brake force;
wherein the active brake booster (12) and the at least one pump (14) are operated successively in such a way that the brake pressure (p) in the at least one wheel brake cylinder is firstly increased from an initial pressure to an intermediate pressure (p0) exclusively by means of the active brake force booster (12) and, after that, is increased from the intermediate pressure (p0) to a higher pressure exclusively by means of the at least one pump (14).

9. Method according to Claim 8, wherein, by means of the combined operation of the active brake booster (12) and the at least one pump (14), a driver assistance function or emergency braking is carried out.

## Revendications

1. Arrangement de commande (10) pour un système de freinage autonome à force de freinage amplifiée d'un véhicule, comprenant :
un dispositif de pilotage (16) qui est conçu pour délivrer, en tenant compte d'un signal de consigne (18) fourni concernant une mise en pression de freinage autonome à effectuer dans au moins un cylindre de frein de roue du système de freinage, au moins un signal de commande de pompe (20) à au moins une pompe (14) du système de freinage de telle sorte qu'une pression de freinage (p) dans l'au moins un cylindre de frein de roue peut être augmentée au moyen de l'au moins une pompe (14) pilotée par l'au moins un signal de commande de pompe (20) ;
le dispositif d'attaque (16) étant en plus conçu pour délivrer, en tenant compte du signal de consigne (18), au moins un signal de commande d'amplificateur de freinage (22) à un amplificateur de freinage (12) actif du système de freinage de telle sorte qu'une force d'amplificateur peut être exercée au moyen de l'amplificateur de freinage (12) actif piloté par l'au moins un signal de commande d'amplificateur de freinage (22) sur au moins un piston positionnable d'un maître-cylindre de frein du système de freinage, de sorte que la pression de freinage (p) dans l'au moins un cylindre de frein de roue peut être augmentée au moyen d'une pression interne dans le maître-cylindre de frein augmentée en raison de l'au moins un piston positionné ;
**caractérisé en ce que**
le dispositif de pilotage (16) est conçu pour faire fonctionner l'amplificateur de freinage (12) et l'au moins une pompe (14) l'un après l'autre de telle sorte que
- la pression de freinage (p) dans l'au moins un cylindre de frein de roue peut être augmentée de manière autonome et sans force de freinage de conducteur ; et
- la pression de freinage (p) dans l'au moins un cylindre de frein de roue peut être augmentée tout d'abord d'une pression initiale à une pression intermédiaire (p0) exclusivement au moyen de l'amplificateur de freinage (12) actif piloté par l'au moins un signal de commande d'amplificateur de freinage (22) et ensuite de la pression intermédiaire (p0) à une pression plus élevée exclusivement au moyen de l'au moins une pompe (14) pilotée par l'au moins un signal de commande de pompe (20).

2. Arrangement de commande (10) selon la revendication 1, le dispositif de pilotage (16) étant conçu pour effectuer un pilotage combiné de l'amplificateur de freinage (12) actif au moyen de l'au moins un signal de commande d'amplificateur de freinage (22) et de l'au moins une pompe (14) au moyen de l'au moins un signal de commande de pompe (20) de telle sorte que la pression de freinage (p) dans l'au moins un cylindre de frein de roue peut être augmentée de manière autonome.

3. Arrangement de commande (10) selon la revendication 2, le dispositif de pilotage (16) étant conçu pour effectuer un pilotage combiné de l'amplificateur de freinage (12) actif au moyen de l'au moins un signal de commande d'amplificateur de freinage (22) et de l'au moins une pompe (14) au moyen de l'au moins un signal de commande de pompe (20) de telle sorte que la pression de freinage (p) dans l'au moins un cylindre de frein de roue peut être augmentée de manière autonome pour une fonction d'assistance au conducteur ou pour un freinage d'urgence.

4. Arrangement de commande (10) selon l'une des revendications précédentes, le dispositif de pilotage (16) étant conçu pour piloter un amplificateur de freinage électromécanique en tant qu'amplificateur de freinage (12) actif au moyen de l'au moins un signal de commande d'amplificateur de freinage (22).

5. Arrangement de commande (10) selon l'une des revendications précédentes, le dispositif de pilotage (16) étant conçu pour recevoir le signal de consigne (18) de la part d'un arrangement d'assistance au conducteur externe et/ou de la part d'un arrangement de freinage d'urgence externe.

6. Arrangement de commande (10) selon l'une des revendications 1 à 4, l'arrangement de commande (10) étant réalisé sous la forme d'un arrangement d'assistance au conducteur et/ou d'un arrangement de freinage d'urgence.

7. Système de freinage autonome à force de freinage amplifiée pour un véhicule comprenant un arrangement de commande (10) selon l'une des revendications précédentes.

8. Procédé pour faire fonctionner un système de freinage autonome à force de freinage amplifiée d'un véhicule, comprenant les étapes suivantes :
exécution au moins partielle d'une mise en pression de freinage autonome dans au moins un cylindre de frein de roue du système de freinage en faisant fonctionner au moins une pompe (14) du système de freinage de telle sorte qu'une pression de freinage (p) dans l'au moins un cylindre de frein de roue est augmentée au moyen de l'au moins une pompe (14) mise en fonctionnement (S1);
et par une exécution partielle de la mise en pression de freinage autonome, en faisant en plus fonctionner un amplificateur de freinage (12) actif du système de freinage de telle sorte qu'une force d'amplificateur est exercée au moyen de l'amplificateur de freinage (12) actif sur au moins un piston positionnable d'un maître-cylindre de frein du système de freinage, de sorte que la pression de freinage (p) dans l'au moins un cylindre de frein de roue est augmentée au moyen d'une pression interne dans le maître-cylindre de frein augmentée en raison de l'au moins un piston positionné (S2) ;
**caractérisé par** les étapes :
exécution de la mise en pression de freinage autonome en tant que mise en pression de freinage sans force de freinage de conducteur ;
l'amplificateur de freinage (12) actif et l'au moins une pompe (14) étant mis en fonctionnement l'un après l'autre de telle sorte que la pression de freinage (p) dans l'au moins un cylindre de frein de roue est augmentée tout d'abord d'une pression initiale à une pression intermédiaire (p0) exclusivement au moyen de l'amplificateur de freinage (12) actif, et ensuite de la pression intermédiaire (p0) à une pression plus élevée exclusivement au moyen de l'au moins une pompe (14) .

9. Procédé selon la revendication 8, une fonction d'assistance au conducteur ou un freinage d'urgence étant exécuté(e) au moyen du fonctionnement combiné de l'amplificateur de freinage (12) actif et de l'au moins une pompe (14).
